# FASCICULE DE BREVET EUROPEEN

(11) **EP 2 368 099 B1**
(45) Date de publication et mention de la délivrance du brevet: **29.07.2020**
(21) Numéro de dépôt: 09804270.8
(22) Date de dépôt: 10.12.2009
(51) Int. Cl.: G01J 3/26

(54) **DISPOSITIF DE SPECTROSCOPIE OPTIQUE COMPORTANT UNE PLURALITÉ DE SOURCES D'ÉMISSION**
OPTISCHE SPEKTROSKOPIEEINRICHTUNG MIT MEHREREN EMISSIONSQUELLEN
OPTICAL SPECTROSCOPY DEVICE HAVING A PLURALITY OF EMISSION SOURCES

(30) Priorité: 11.12.2008 FR 0806957
(43) Date de publication de la demande: 28.09.2011
(73) Titulaire: Silios Technologies, 13790 Peynier (FR)
(72) Inventeur: TISSERAND, Stéphane, F-13006 Marseille (FR); HUBERT, Marc, F-13090 Aix en Provence (FR); ROUX, Laurent, F-13013 Marseille (FR)
(74) Mandataire: Prugneau, Philippe
(86) Numéro de dépôt international: PCT/FR2009/001407
(87) Numéro de publication internationale: WO 2010/066968

(56) Documents cités:
- GB-A- 2 215 038
- US-A1- 2007 070 347
- US-A1- 2007 188 764

## Description

La présente invention concerne un dispositif de spectroscopie optique comportant une pluralité de sources d'émission.

Le domaine de l'invention est celui de l'analyse spectrométrique qui vise notamment la recherche de constituants chimiques entrant dans la composition d'un milieu solide, liquide ou gazeux au moyen d'une source lumineuse. Il s'agit d'enregistrer le spectre d'absorption en réflexion ou en transmission de ce milieu. La lumière qui interagit avec celui-ci est absorbée dans certaines bandes de longueurs d'onde. Cette absorption sélective est une signature d'une partie ou de l'ensemble des constituants du milieu. La plage de longueurs d'onde du spectre à mesurer peut appartenir à l'ultra violet et/ou au rayonnement visible et/ou à l'infra rouge (proche, moyen, lointain).

Une première solution fait appel au spectromètre à réseau. Dans cet appareil, le réseau agissant en tant que filtre est disposé à une distance conséquente du détecteur. La résolution est d'autant meilleure que cette distance est importante. Il s'ensuit que cet appareil ne peut pas être miniaturisé si l'on souhaite conserver une résolution acceptable. De plus, le réglage de cet appareil est compliqué et sa stabilité est délicate car il nécessite un alignement optique précis.

La plupart des autres spectromètres utilisent au moins un filtre Fabry-Pérot.

Pour mémoire, un tel filtre est une lame à face parallèle d'un matériau (le plus souvent d'indice de réfraction faible tel qu'air, silice, ...) appelé membrane d'espacement (plus couramment « spacer » en terminologie anglo-saxonne), cette membrane figurant entre deux miroirs. Il est souvent réalisé par dépôt de couches minces sous vide. Ainsi, pour un filtre dont la bande passante est centrée sur une longueur d'onde centrale λ, le premier miroir consiste en m alternances de couches d'épaisseur optique λ/4 d'un matériau haut indice H et d'un matériau bas indice B. La membrane d'espacement consiste fréquemment en 2 couches du matériau bas indice B d'épaisseur optique λ/4. En général le second miroir est symétrique du premier. La modification de l'épaisseur géométrique de la membrane d'espacement permet d'accorder le filtre à la longueur d'onde centrale pour laquelle l'épaisseur optique vaut un multiple de λ/2.

Dans certains cas, un nombre fini de bandes passantes relativement fines (c'est-à-dire un spectre discret par opposition à un spectre continu) est suffisant pour identifier les constituants recherchés, si bien que la première solution mentionnée ci-dessus n'est pas optimisée.

Une deuxième solution connue prévoit d'utiliser une cellule de filtrage pourvue d'un filtre élémentaire par bande à analyser. Si le nombre de bandes vaut n, la réalisation de n filtres passe donc par n fabrications distinctes en dépôt sous vide. Le coût est ainsi très important (et quasi-proportionnel au nombre n de bandes) pour les petites séries et ne devient réellement intéressant que pour des séries suffisamment importantes. De plus, ici aussi les possibilités de miniaturisation sont très limitées et il est difficilement envisageable de prévoir un grand nombre de filtres.

Une troisième solution connue met en œuvre un filtre Fabry-Pérot en forme de coin pour ce qui concerne son profil dans un plan perpendiculaire au substrat. On connaît ainsi le document US 2006/0209413 qui enseigne un analyseur de spectre ayant ce type de profil. Dans ce plan repéré Oxy, les axes Ox et Oy étant respectivement colinéaire et perpendiculaire au substrat, les épaisseurs selon Oy des miroirs et de la membrane d'espacement varient linéairement en fonction de la position selon Ox où elles sont mesurées. On définit ainsi une cellule de filtrage ayant une structure linéaire (à une dimension) ou matricielle (à deux dimensions) comportant une pluralité de filtres élémentaires quasi-monochromatiques. La détection est assurée au moyen d'une cellule de détection intégrée superposée à la cellule de filtrage, cette cellule de détection étant munie d'une pluralité de détecteurs élémentaires qui coïncide avec la pluralité de filtres élémentaires.

Pour ce qui concerne la cellule de filtrage, en premier lieu, le contrôle du procédé « couches minces » est ici très périlleux. En second lieu, la fabrication collective de plusieurs filtres sur un même wafer pose de grandes difficultés de reproductibilité d'un filtre à l'autre. En troisième lieu, la variation continue de l'épaisseur qui peut présenter un avantage dans certaines circonstances est mal adaptée au cas où un détecteur doit être centré sur une longueur d'onde bien précise. En effet, la taille de ce détecteur fait qu'il va détecter toutes les longueurs d'onde comprises entre celles sur lesquelles sont accordées ses deux extrémités. Là encore, la production en volume à bas coût n'est pas très réaliste.

Pour ce qui concerne la cellule de détection, il apparaît qu'elle met en œuvre une pluralité de détecteurs élémentaires. En premier lieu, cette configuration n'est avantageuse que si l'on peut recourir à l'intégration des détecteurs, ce qui n'est pas toujours le cas. En second lieu, un tel détecteur peut être un composant coûteux lorsque la bande à analyser ne rentre pas dans le spectre d'absorption d'un matériau industriellement répandu tel que le silicium.

On connaît par ailleurs les documents US 2007/0188764 et US2007/0070347 qui décrivent tous deux un dispositif de spectroscopie comportant une cellule de filtrage et une cellule d'émission. Dans ces deux documents, la cellule de filtrage se réduit à un seul filtre qui couvre la totalité de la source d'émission.

La présente invention a ainsi pour objet un dispositif de spectroscopie en longueur d'onde selon la revendication 1.

Selon l'invention, un dispositif de spectroscopie en longueur d'onde comporte, sur un substrat, une cellule de filtrage constituée de deux miroirs séparés par une membrane d'espacement, cette cellule de filtrage étant formée par une pluralité de filtres interférentiels ; de plus, ce dispositif comporte une cellule d'émission comprenant une pluralité de sources d'émission, chacune de ces sources étant associée à l'un des filtres interférentiels.

La pluralité de sources d'émission permet d'utiliser un seul détecteur. La présente invention procure un avantage déterminant lorsqu'il est plus économique de multiplier les sources que les détecteurs.

Avantageusement, la cellule d'émission se présentant comme un support plan homothétique du substrat, les sources d'émission et les filtres interférentiels sont alignés selon la normale commune à ce support et à ce substrat.

De préférence, le dispositif comporte au moins une cellule d'adaptation comprenant une pluralité de lentilles, chacune de ces lentilles étant associée à l'un des filtres interférentiels.

Pour optimiser l'efficacité du détecteur, il convient que la cellule de filtrage soit disposée entre la cellule d'émission et la cellule d'adaptation. On adapte ainsi la taille des filtres à celle du détecteur.

Selon un mode de réalisation privilégié de la cellule de filtrage, certains au moins des filtres sont alignés dans un premier ruban.

De même, certains au moins des filtres sont alignés dans un second ruban parallèle au et disjoint du premier ruban.

Suivant une caractéristique additionnelle, deux au moins des filtres qui sont adjacents sont séparés par une barrière de diaphonie.

La présente invention apparaîtra maintenant avec plus de détails dans le cadre de la description qui suit d'un exemple de réalisation donné à titre illustratif en se référant aux figures annexées qui représentent :
- la figure 1, le schéma d'un dispositif de spectroscopie associé à un détecteur ;
- la figure 2, le schéma d'une cellule d'émission ;
- la figure 3, le schéma de principe d'une première version d'une cellule de filtrage ;
- la figure 4, le schéma de principe d'une deuxième version d'une cellule de filtrage à une dimension, plus particulièrement :
   - la figure 4a, une vue de dessus de cette cellule, et
   - la figure 4b, une vue en coupe de cette cellule ;
- les figures 5a à 5c, trois étapes d'un premier mode de réalisation de cette cellule de filtrage ;
- les figures 6a à 6f, six étapes d'un deuxième mode de réalisation de cette cellule de filtrage ;
- la figure 7, le schéma d'une cellule de filtrage à deux dimensions ;
- les figures 8a à 8f, chacune un masque susceptible d'être utilisé lors d'une étape de gravure ;
- la figure 9, le schéma d'une cellule d'adaptation.

Les éléments présents dans plusieurs figures sont affectés d'une seule et même référence.

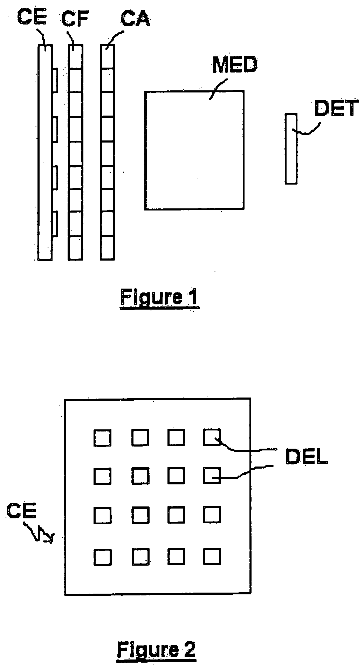

En référence à la figure 1, le dispositif de l'invention est ici prévu pour l'analyse en transmission d'un milieu quelconque MED. Il comporte un module de rayonnement comportant essentiellement une cellule d'émission CE superposée à une cellule de filtrage CF et un module de détection qui se réduit ici à un détecteur unique DET. Naturellement, le milieu MED à analyser figure entre le module de rayonnement et le détecteur.

Optionnellement, au moins une cellule d'adaptation CA est prévue pour l'adaptation optique du module de rayonnement au détecteur. Dans le cas présent cette cellule d'adaptation CA est juxtaposée à la cellule de filtrage CF, face au détecteur DET.

Alternativement, la cellule d'adaptation pourrait figurer entre la cellule d'émission CE et la cellule de filtrage CF. On peut même envisager deux cellules d'adaptation, l'une entre la cellule d'émission CE et la cellule de filtrage CF, l'autre juxtaposée à la cellule de filtrage CF en face du détecteur DET.

En référence à la figure 2, la cellule d'émission CE consiste en un réseau de sources d'émission élémentaires DEL agencées suivant une matrice 4x4 sur un support. Dans le cas présent, ces sources sont des diodes électroluminescentes reportées par hybridation sur le support. Cet agencement est donné à titre indicatif car de nombreuses autres solutions sont disponibles, cercles concentriques, hexagones, .... De même, le nombre de sources importe peu pour la mise en œuvre de l'invention.

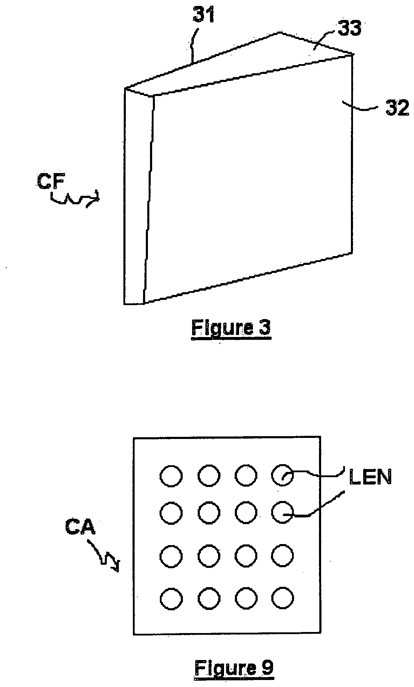

En référence à la figure 3, selon une première version, la cellule de filtrage est analogue à celle décrite dans le document US 2006/0209413 susnommé. Elle prend la forme de deux miroirs plans 31, 32 séparés par une membrane d'espacement 33, l'un de ces miroirs 32 étant incliné par rapport à l'autre 31.

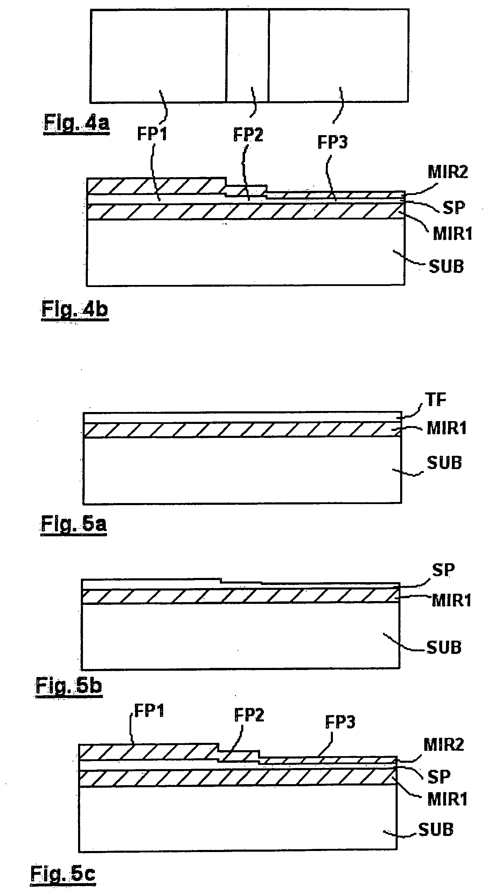

Suivant une deuxième version, la cellule de filtrage adopte une géométrie différente et le principe en est explicité en référence aux figures 4a et 4b au moyen de trois filtres interférentiels du type Fabry-Pérot FP1, FP2, FP3 alignés successivement de sorte qu'ils forment un ruban.

Cette cellule est constituée par l'empilement sur un substrat SUB, en verre ou en silice par exemple, d'un premier miroir M1, d'une membrane d'espacement SP et d'un deuxième miroir MIR2.

La membrane d'espacement SP qui définit la longueur d'onde centrale de chaque filtre est donc constante pour un filtre donné et varie d'un filtre à l'autre. Son profil a une forme d'escalier car chaque filtre a une surface sensiblement rectangulaire.

Un premier procédé de réalisation de cette cellule de filtrage en technologie couches minces est donné à titre d'exemple.

En référence à la figure 5a, on commence par déposer sur le substrat SUB le premier miroir MIR1 qui consiste en un empilement de couches diélectriques, de couches métalliques ou bien en une combinaison de ces deux types de couches. Ensuite, on dépose une couche ou un ensemble de couches diélectriques TF appelé à définir la membrane d'espacement SP.

En référence à la figure 5b, ce diélectrique TF est gravé :
- dans un premier temps au niveau des deuxième FP2 et troisième FP3 filtres pour définir l'épaisseur de la membrane d'espacement SP au niveau du 2^{ème} filtre FP2,
- dans un deuxième temps au niveau du troisième filtre FP3 pour définir à son niveau l'épaisseur de cette membrane.

La membrane d'espacement SP au niveau du premier filtre FP1 a l'épaisseur du dépôt.

En référence à la figure 5c, le deuxième miroir MIR2 est déposé sur la membrane d'espacement SP pour finaliser les trois filtres.

La membrane d'espacement SP peut être obtenue par dépôt d'un diélectrique TF puis gravures successives comme présenté ci-dessus mais elle peut également être obtenue par plusieurs dépôts successifs de couches minces.

A titre d'exemple, on peut balayer la plage de longueurs d'onde 3 700 à 4 300 nm en modifiant l'épaisseur optique de la membrane d'espacement.

Il convient ici de noter que l'épaisseur de la membrane d'espacement doit être suffisamment faible pour n'obtenir qu'une bande de transmission dans le domaine à sonder. En effet, plus on augmente cette épaisseur e, plus le nombre n de longueurs d'onde λ satisfaisant la condition [ne = k λ/2] augmente.

Un deuxième procédé de réalisation de la cellule de filtrage est maintenant exposé.

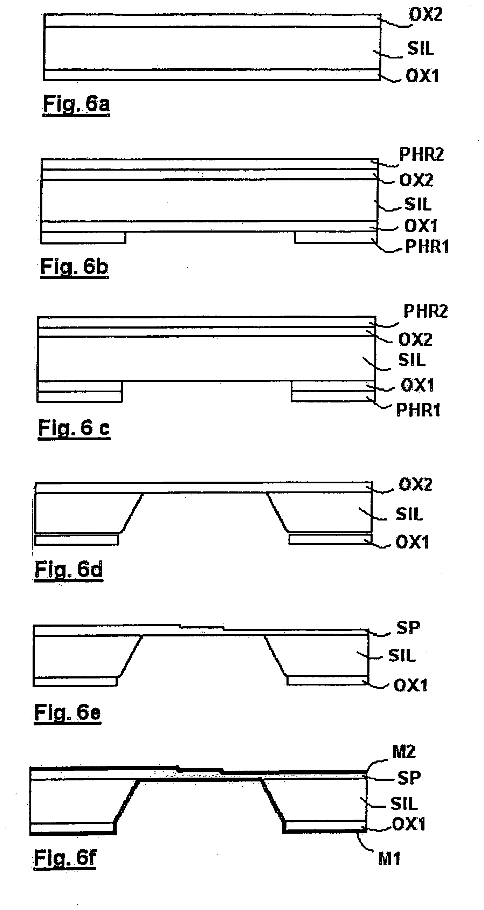

En référence à la figure 6a, on commence par pratiquer une oxydation thermique d'un substrat SIL en silicium sur sa face inférieure OX1 et sur sa face supérieure OX2.

En référence à la figure 6b, les faces inférieure OX1 et supérieure OX2 du substrat sont recouvertes respectivement d'une couche inférieure PHR1 et d'une couche supérieure PHR2 de résine photosensible. Ensuite, une ouverture rectangulaire est pratiquée dans la couche inférieure PHR1 par photolithographie.

En référence à la figure 6c, l'oxyde thermique de la face inférieure OX1 est gravé au droit de l'ouverture rectangulaire pratiquée dans la couche inférieure PHR1. Les couches inférieure PHR1 et supérieure PHR2 sont alors retirées.

En référence à la figure 6d, on réalise une gravure anisotrope du substrat SIL (orientation cristallographique 1 - 0 - 0 par exemple) au droit de l'ouverture rectangulaire, l'oxyde thermique de la face inférieure OX1 servant de masque et celui de la face supérieure OX2 servant de couche d'arrêt de gravure. Il peut s'agir soit d'une gravure humide au moyen d'une solution de potasse (KOH) ou de triméthyl ammonium hydroxyle (TMAH) soit d'une gravure sèche en plasma. Il résulte de cette opération que seule subsiste au fond de l'ouverture rectangulaire une membrane d'oxyde.

En référence à la figure 6e, cet oxyde est gravé :
- dans un premier temps au niveau des deuxième FP2 et troisième FP3 filtres pour définir l'épaisseur de la membrane d'espacement SP au niveau du 2^{ème} filtre FP2,
- dans un deuxième temps au niveau du troisième filtre FP3 pour définir à son niveau l'épaisseur de cette membrane SP.

En référence à la figure 6f, les premier M1 et deuxième M2 miroirs sont déposés sur les faces inférieure OX1 et supérieure OX2 du substrat SIL.

On peut éventuellement terminer la réalisation de la cellule de filtrage en déposant une couche de passivation (non représentée) sur l'une et/ou sur l'autre des faces inférieure OX1 et supérieure OX2.

L'invention permet donc de réaliser un ensemble de filtres alignés, ces filtres pouvant ainsi être référencés dans un espace à une dimension.

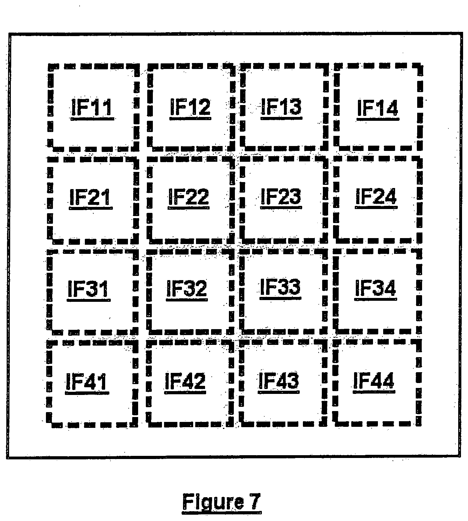

En référence à la figure 7, l'invention permet également d'organiser de tels filtres dans un espace à deux dimensions sous une forme matricielle.

Quatre rubans horizontaux identiques comprennent chacun quatre filtres interférentiels. Le premier ruban, celui qui apparaît en haut de la figure, correspond à la première ligne d'une matrice et comprend les filtres IF11 à IF14. Le deuxième, le troisième, respectivement le quatrième ruban comprend les filtres IF21 à IF24, les filtres IF31 à IF34, respectivement les filtres IF41 à IF44.

L'organisation est dite matricielle car le filtre IFjk appartient au jème ruban horizontal et également à un kième ruban vertical qui comprend les filtres IF1k, IF2k, ..., IF4k.

Le procédé de réalisation du module de filtrage peut être analogue à l'un quelconque des deux procédés décrits plus haut.

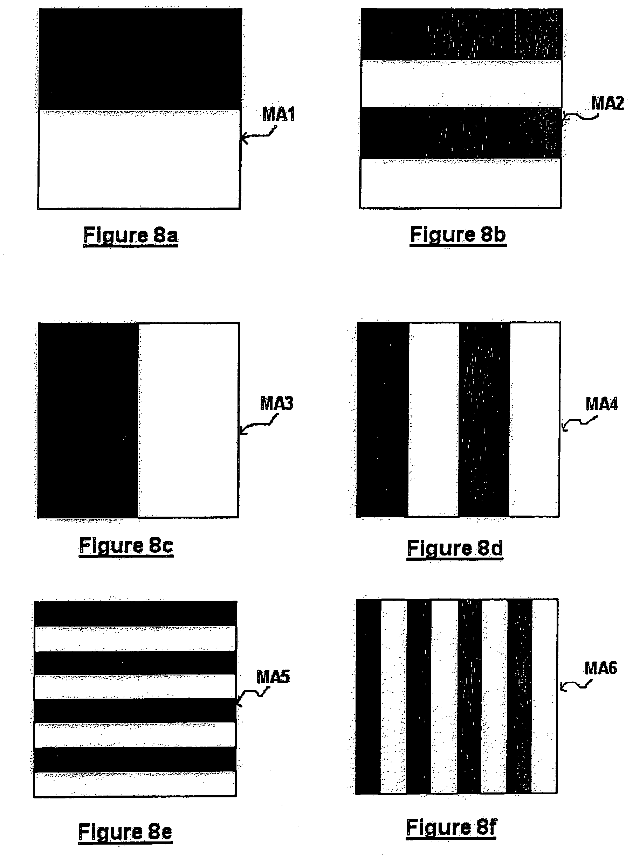

On commence donc par déposer sur le substrat le premier miroir puis un diélectrique. Ce diélectrique est gravé :
- en référence à la figure 8a, au moyen d'un premier masque MA1 qui cache les deux premiers rubans horizontaux IF11-IF14 et IF21-IF24,
- en référence à la figure 8b, au moyen d'un second masque MA2 qui cache les premier IF11-IF14 et troisième IF31-IF34 rubans horizontaux,
- en référence à la figure 8c, au moyen d'un troisième masque MA3 qui cache les premier IF11-IF41 et deuxième IF12-IF42 rubans verticaux, et
- en référence à la figure 8d, au moyen d'un quatrième masque MA4 qui cache les premier IF11-IF41 et troisième IF13-IF43 rubans verticaux.

Ensuite, le deuxième miroir est déposé sur la membrane d'espacement ainsi gravée pour finaliser les 16 filtres de la matrice 4x4.

La gravure d'une même profondeur au moyen des différents masques présente peu d'intérêt. Par contre, si l'on souhaite obtenir une progression régulière de l'épaisseur des filtres, on peut procéder comme suit :
- gravure d'une profondeur p au moyen du quatrième masque MA4,
- gravure d'une profondeur 2p au moyen du troisième masque MA3,
- gravure d'une profondeur 4p au moyen du deuxième masque MA2, et
- gravure d'une profondeur 8p au moyen du premier masque MA1.

Il est souhaitable de bien séparer les différents filtres de la cellule de filtrage afin d'éviter un recouvrement partiel d'un filtre sur un filtre qui lui est adjacent et de minimiser un éventuel problème de diaphonie. Pour ce faire, on peut ajouter sur la cellule de filtrage un quadrillage constituant une barrière de diaphonie pour délimiter tous les filtres. Ce quadrillage sera absorbant si ce module est utilisé en réflexion ou bien réfléchissant si celui-ci est employé en transmission. A titre d'exemple, un quadrillage absorbant peut être réalisé par dépôt et gravure d'un chrome noir (chrome + oxyde de chrome) tandis qu'un quadrillage réfléchissant peut être réalisé par dépôt et gravure de chrome.

A titre indicatif, la dimension des filtres est de l'ordre de 500x500 microns². D'autres tailles de filtre sont bien sûr possibles cependant, la taille doit être suffisante pour éviter des phénomènes de diffraction trop marqués.

La cellule de filtrage CF est donc prévue pour être associée à la cellule d'émission CE de sorte que chaque source soit en regard d'un filtre.

En référence à la figure 9, la cellule d'adaptation CA consiste en un réseau de microlentilles LEN agencées elles aussi suivant une matrice 4x4 sur une plaque transparente.

Les cellules d'émission CE, de filtrage CF et d'adaptation CA sont donc superposées de sorte que chaque source DEL soit suivie d'un filtre IF et d'une microlentille LEN selon l'axe perpendiculaire au support, au substrat et à la plaque.

Le détecteur est un composant standard. Il est réalisé par exemple en arséniure de gallium si l'on souhaite opérer l'analyse dans l'ultraviolet.

On notera ici que le montage mécanique est très simple car il comporte peu de pièces optiques et il ne comporte pas de pièce mobile. La mesure est en conséquence très stable et très reproductible.

Le dispositif objet de l'invention peut être utilisé de différentes manières :
- allumage simultané de toutes les sources d'émission pour l'obtention d'un spectre global,
- allumage séquentiel de différentes sources pour l'obtention des différents spectres correspondant aux filtres sollicités,
- allumage séquentiel de groupes de sources.

## Revendications

1. Dispositif de spectroscopie en longueur d'onde comportant, sur un substrat, un module de rayonnement comprenant une cellule d'émission (CE) et une cellule de filtrage (CF) constituée de deux miroirs (MIR1 , MIR2 ; M1, M2) séparés par une membrane d'espacement (SP), le dispositif étant **caractérisé en ce que** cette cellule de filtrage est formée par une pluralité de filtres interférentiels (FP1, FP2, FP3 ; IF11-IF44), ladite cellule d'émission (CE) comprend une pluralité de sources d'émission (LED), chacune desdites sources étant associée à l'un desdits filtres interférentiels de sorte que chacune des sources d'émission soit en regard d'un des filtres interférentiels, une épaisseur de la membrane d'espacement (SP) est constante pour chaque filtre interférentiel et varie d'un filtre à l'autre, et le dispositif de spectroscopie est prévu pour l'analyse en transmission d'un milieu (MED), ledit milieu devant figurer, en cours d'analyse, entre un détecteur (DET) et ledit module de rayonnement.

2. Dispositif selon la revendication 1 **caractérisé en ce que**, ladite cellule d'émission (CE) se présentant comme un support plan homothétique dudit substrat, lesdites sources d'émission (LED) et lesdits filtres interférentiels (IF11-IF44) sont alignés selon la normale commune à ce support et à ce substrat.

3. Dispositif selon la revendication 2, **caractérisé en ce qu'**il comporte au moins une cellule d'adaptation (CA) comprenant une pluralité de lentilles (LEN), chacune desdites lentilles étant associée à l'un desdits filtres interférentiels (IF11-IF44).

4. Dispositif selon la revendication 3, **caractérisé en ce que** ladite cellule de filtrage (CF) est disposée entre ladite cellule d'émission (CE) et ladite cellule d'adaptation (CA).

5. Dispositif selon l'une quelconque des revendications précédentes, **caractérisé en ce que** certains au moins desdits filtres (FP1, FP2, FP3 ; IF11-IF14) sont alignés dans un premier ruban.

6. Dispositif selon la revendication 5, **caractérisé en ce que** certains au moins desdits filtres (IF21-IF24) sont alignés dans un second ruban parallèle au et disjoint du premier ruban.

7. Dispositif selon l'une quelconque des revendications 5 ou 6, **caractérisé en ce que** deux au moins desdits filtres (FP1, FP2, FP3 ; IF11-IF44) qui sont adjacents sont séparés par une barrière de diaphonie.

## Patentansprüche

1. Spektroskopieeinrichtung in Abhängigkeit von der Wellenlänge, umfassend, auf einem Substrat, ein Strahlungsmodul, umfassend eine Emissionszelle (CE) und eine durch zwei durch einen Abstandshalter (SP) getrennte Spiegel (MIR1, MIR2; M1, M2) gebildete Filterzelle (CF), wobei die Einrichtung **dadurch gekennzeichnet ist, dass** diese Filterzelle durch eine Mehrzahl von Interferenzfiltern (FP1, FP2, FP3; IF11-IF44) gebildet ist, wobei die Emissionszelle (CE) eine Mehrzahl von Emissionsquellen (LED) umfasst, wobei jede der Quellen einem der Interferenzfilter derart zugeordnet ist, dass jede der Emissionsquellen gegenüberliegend zu einem der Interferenzfilter ist, wobei eine Dicke des Abstandshalters (SP) für jeden Interferenzfilter konstant ist und von einem Filter zum anderen variiert, und wobei die Spektroskopieeinrichtung vorgesehen ist für die Transmissionsanalyse eines Mediums (MED), wobei das Medium während der Analyse zwischen einem Detektor (DET) und dem Strahlungsmodul angeordnet sein soll.

2. Einrichtung nach Anspruch 1, **dadurch gekennzeichnet, dass** die Emissionsquelle (CE) als planer geometrisch dilatierter Support des Substrats ausgebildet ist, wobei die Strahlungsquellen (LED) und die Interferenzfilter (IF11-IF44) gemäß der gemeinsamen Normalen zu diesem Support und zu diesem Substrat ausgerichtet sind.

3. Einrichtung nach Anspruch 2, **dadurch gekennzeichnet, dass** sie wenigstens eine Anpassungszelle (CA) umfasst, die eine Mehrzahl von Linsen (LEN) umfasst, wobei jede der Linsen einem der Interferenzfilter (IF11-IF44) zugeordnet ist.

4. Einrichtung nach Anspruch 3, **dadurch gekennzeichnet, dass** die Filterzelle (CF) zwischen der Emissionszelle (CE) und der Anpassungszelle (CA) angeordnet ist.

5. Einrichtung nach einem der vorhergehenden Ansprüche, **dadurch gekennzeichnet, dass** zumindest einige der Filter (FP1, FP2, FP3; IF11-IF14) in einem ersten Streifen angeordnet sind.

6. Einrichtung nach Anspruch 5, **dadurch gekennzeichnet, dass** zumindest einige der Filter (IF21-IF24) in einem zweiten, zu dem ersten parallelen und von diesem verschiedenen Streifen angeordnet sind.

7. Einrichtung nach einem der Ansprüche 5 oder 6, **dadurch gekennzeichnet, dass** zumindest zwei der benachbarten Filter (FP1, FP3, FP3; IF11-IF44) durch eine Übersprech-Barriere getrennt sind.

## Claims

1. A wavelength spectroscopy device comprising, on a substrate, a radiation module comprising an emission cell (CE) and a filter cell (CF) constituted by two mirrors (MIR1, MIR2; M1, M2) separated by a spacer membrane (SP), the device being **characterized in that** the filter cell is made up of a plurality of interference filters (FP1, FP2, FP3; IF11-IF44), said emission cell (CE) comprises a plurality of emission sources (LED), each of said sources being associated with one of said interference filters so that each of the emission sources faces one of the interference filters, a thickness of the spacer membrane (SP) is constant for a given interference filter and varies from one interference filter to another, and the spectroscopy device is for an analysis in transmission of a medium (MED), said medium having to be situated, during analysis, between a detector (DET) and said radiation module.

2. A device according to claim 1, **characterized in that** said emission cell (CE) is in the form of a plane support that is geometrically similar with said substrate, said emission sources (LED) and said interference filters (IF11-IF44) being in alignment along the normal common to said support and to said substrate.

3. A device according to claim 2, **characterized in that** it includes at least one matching cell (CA) comprising a plurality of lenses (LEN), each of said lenses being associated with one of said interference filters (IF11-IF44).

4. A device according to claim 3, **characterized in that** said filter cell (CF) is located between said emission cell (CE) and said matching cell (CA).

5. A device according to any preceding claim, **characterized in that** at least some of said filters (FP1, FP2, FP3; IF11-IF14) are in alignment in a first strip.

6. A device according to claim 5, **characterized in that** at least some of said filters (IF21-IF24) are in alignment in a second strip parallel to and separate from the first strip.

7. A device according to claim 5 or claim 6, **characterized in that** at least two of said filters (FP1, FP2, FP3; IF11-IF44) that are adjacent are separated by a cross-talk barrier.
